## Europäisches Patentamt
## European Patent Office
## Office européen des brevets

(19)

(11) Publication number: **0 087 926**
**B1**

(12) **EUROPEAN PATENT SPECIFICATION**

(45) Date of publication of patent specification: **01.06.88**

(51) Int. Cl.⁴: **G 21 C 21/18, C 04 B 35/10**

(21) Application number: **83300968.1**

(22) Date of filing: **24.02.83**

(54) Burnable neutron absorbers.

(30) Priority: **26.02.82 US 352731**

(43) Date of publication of application:
**07.09.83 Bulletin 83/36**

(45) Publication of the grant of the patent:
**01.06.88 Bulletin 88/22**

(84) Designated Contracting States:
**DE GB IT SE**

(56) References cited:
**EP-A-0 087 927**
**FR-A-2 133 017**
**GB-A- 865 226**
**GB-A- 942 945**
**GB-A- 993 238**
**GB-A-2 112 560**

(73) Proprietor: **WESTINGHOUSE ELECTRIC CORPORATION**
**Westinghouse Building Gateway Center**
**Pittsburgh Pennsylvania 15222 (US)**

(72) Inventor: **Radford, Kenneth Charles**
**1637 Georgetown Place**
**Pittsburgh Pennsylvania (US)**
Inventor: **Carlson, William George**
**3339 Woodland Drive**
**Murrysville Pennsylvania (US)**

(74) Representative: **van Berlyn, Ronald Gilbert**
**23, Centre Heights**
**London, NW3 6JG (GB)**

Courier Press, Leamington Spa, England.

## 0 087 926

**Description**

This invention relates to burnable neutron absorbers, also called burnable poisons, for nuclear reactors. The burnable neutron absorbers with which this invention concerns itself are of the type described in the co-pending application EP—A—0087927. Such neutron absorbers include annular ceramic pellets which are stacked in tubes inserted in the core of a reactor. It is with the pellets that this invention concerns itself. Such a pellet includes a matrix of a refractory material which may include aluminum oxide ($Al_2O_3$) of zirconium oxide $ZrO_2$ or a combination of the two. A neutron absorber is distributed throughout this matrix. The neutron absorber may include one or more elements or compounds of the metals boron, gadolinium, samarium, cadmium, europium, hafnium, dysprosium and indium. A neutron absorber commonly used is boron carbide ($B_4C$) either natural or with the boron enriched $B^{10}$.

In the interest of brevity and concreteness to facilitate the understanding of these skilled in the art in the practice of this invention, this application will deal specifically with a matrix of $Al_2O_3$ and a neutron absorber of $B_4C$. It is understood that to the extent that this invention is practiced with other materials, such practice is within the scope of equivalents of this invention.

The method of producing pellets disclosed in the above-mentioned application and the pellets produced thereby have proven themselves highly satisfactory. However, experience with this method and the pellets produced thereby has led to the conclusion that several improvements are desirable. It is desirable that the pores or voids in the matrix be more efficiently or effectively used to take up the expansion of the $B_4C$ and absorb the helium gas generated by the neutron-boron reaction. It is also desirable that the strength, particularly the compressive strength, of the matrix be improved. It is an object of this invention to provide a method for producing neutron absorbing bodies or ceramics having the above-described desirable properties. It is also an object of this invention to provide a neutron-absorbing body or cermaic having the above desirable properties.

In the procedure of the above-mentioned application, a slurry of a mixture of $Al_2O_3$ and $B_4C$ powder is spray dried. The resulting dried powder consists of agglomerated spheres of $Al_2O_3$ in which $B_4C$ particles are embedded. This powder is then pressed into pellets and sintered. It has been realized in arriving at this invention that the invention absorbing effectiveness and the resistance to swelling of the ceramic bodies can be improved and at the same time the strength of the ceramic bodies can be increased by separating the $Al_2O_3$ and the $B_4C$ in the production of the ceramic bodies.

Reference is made to GB—A—865226 which claims a nuclear reactor control rod material comprising a ceramic containing or composed of a non-radioactive element or compound having a neutron-capture cross-section higher than a few hundred barns, and one or more of the oxides of magnesium, calcium, aluminum or silicon.

In GB—A—865226 it is proposed that ceramic may be formed by mixing together the associated element or compound, such as boron oxide, and that one or more oxides of magnesium, calcium, aluminum or silicon, pressing the mixture to shape and sintering.

The present invention resides in a method of making a burnable neutron-absorber for the burnable-poison rods of a nuclear reactor comprising producing a slurry of a powder of a refractory material including one or more of the class consisting of $Al_2O_3$ and $ZrO_2$; adding a binder to said slurry; drying said slurry to produce a powder of agglomerated particles of aluminum oxide including said binder; mixing said powder with a powder of the class of neutron-absorber materials consisting of one or more elements or compounds of boron, gadolinium, samarium, cadmium, europium, hafnium, dysprosium and indium, to form a mixture of said powders; isostatically compressing said mixture to form a green body; sintering said green body to form a sintered body; and forming said sintered body into a neutron absorber of appropriate shape and dimensions.

In carrying out a method according to one embodiment of the invention, a slurry of the $Al_2O_3$ alone is produced. A hard binder, typically polyvinyl alcohol, is added and the slurry and binder are spray dried. The product of the spray drying is a powder of agglomerated $Al_2O_3$ spheres 30 to 50 µm in mean diameter. This powder is mixed with dry $B_4C$ powder 5 to 15 µm in mean size forming a homogeneous mixture. This mixture is pressed isostatically into green tubes which are then sintered. When the mixture is pressed the agglomerates of $Al_2O_3$ deform and lock together trapping the $B_4C$ particles in the pores. During sintering, the binder volatilizes and the structure of the resulting ceramic has nearly spherical high-density regions of $Al_2O_3$. These regions are predominantly surrounded by pores and by $B_4C$ particles.

This results in a preferred location in the $Al_2O_3$ matrix of the $B_4C$ particles and the pores. The matrix of the $Al_2O$ consists microscopically of high density polycrystalline regions and its strength is higher than for the matrix produced in the practice of the invention of the Radford application. Since the $Al_2O_3$ is dried, the hygroscopic tendency of the matrix is materially reduced. The $B_4C$ particles are predominantly in the pores of the matrix. The available porosity accommodates the swelling of the $B_4C$ particles when bombarded by neutrons and the resulting helium gas.

In order that the invention can be more clearly understood, a convenient embodiment thereof will now be described, by way of example, with reference to the accompanying drawings in which:

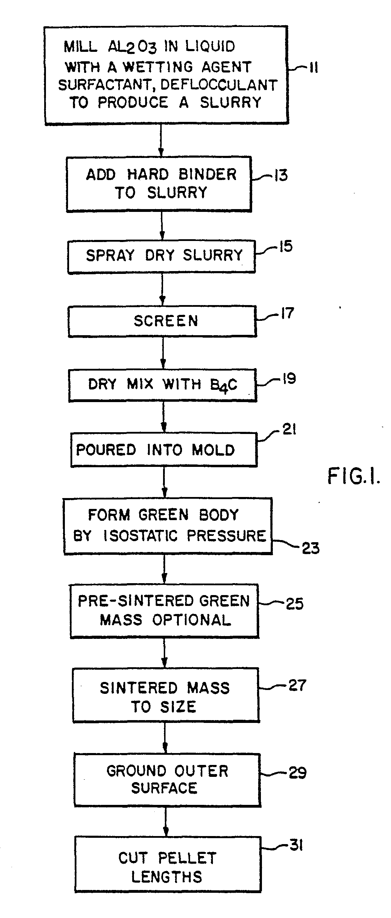

Fig. 1 is a flow chart of a method of making burnable neutron-absorber ceramic pellets;

Fig 2 is photomicrograph of a ceramic body produced by the method of Fig. 1; and

Fig 3 is a photomicrograph of a ceramic body produced in accordance with the method of the

2

# 0 087 926

above-mentioned European application and is presented for comparison purposes.

In the first step 11, a powder of $Al_2O_3$ is milled in a ball mill in a liquid, typically water which may be deionized. Small but effective quantities of a wetting agent, a surfactant and a deflocculant are added to the water and $Al_2O_3$. The mean size of the $Al_2O_3$ is 10 to 30 μm. The relative quantities of the $Al_2O_3$, the water and the other components are substantially the same as disclosed in the Radford application. The result of the milling is a slurry containing about 40% $Al_2O_3$ only.

In the second step 13 a hard binder, such as polyvinyl alcohol, is added to the slurry. In the third step 15 the slurry is spray dried in apparatus as disclosed in the Radford application. The spray drying results in spheres of agglomerated particles of $Al_2O_3$ having a mean diameter of about 30 to 50 μm. In the fourth step 17 this powder is screened to eliminate excessively large agglomerates. In the next step 19 a homogeneous mixture of the $Al_2O_3$ agglomerates and $B_4C$ powder is produced. The content of the $B_4C$ powder in this mixture in weight percent may be between 1 and 50. The mean size of the $B_4C$ particles is between 5 and 15 μm.

The remaining steps 21 to 31 are the same as the corresponding steps of the Radford application. The homogeneous mixture is poured into a mold, step 21. A green cylinder or green mass is formed by compressing the powder in the mold by isostatic pressure, step 23. Optionally the green cylinder may be presintered, step 25. The mass is sintered to size, step 27. The sintering is in an atmosphere of argon at about atmospheric pressure and the sintering temperature is between 1400°C and 1800°C. The outer surface of the sintered body is ground, step 29. Ceramic pellets of $B_4C$ in a matrix of $Al_2O_3$ are cut from the cylinder.

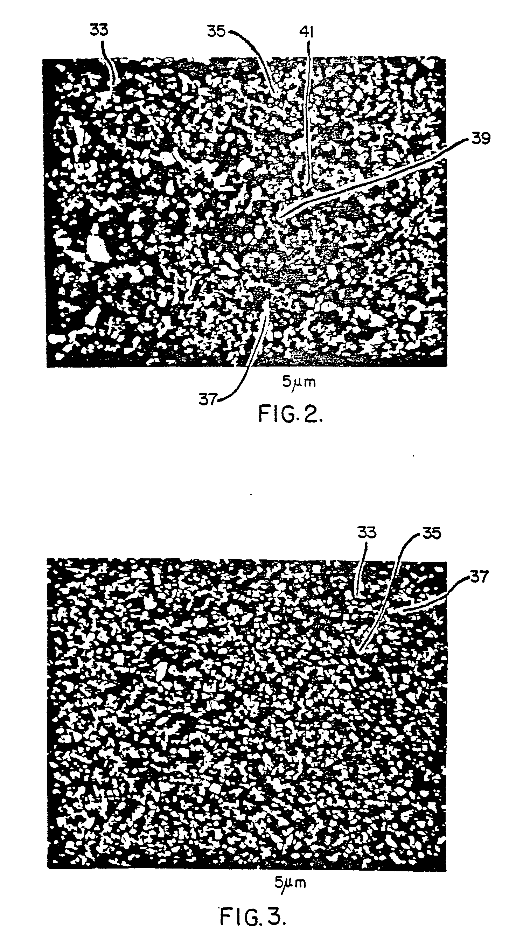

The microstructure of the ceramic body so produced is shown in Fig. 2. As indicated a length of about 0,16 cm (1/16 inch) on the photomicrograph corresponds to 5 μm. The black areas 33 on the photomicrograph are reproductions of the pores, the dark-gray areas 35 of the $B_4C$. The regions of $Al_2O_3$ alone are interlocked as appears at 39. The $B_4C$ regions are in pores surrounding the $Al_2O_3$ as appears at 41.

The photomicrograph shown in Fig. 3 is presented purely for comparison purposes. This photomicrograph also shows black areas 33 corresponding to pores, dark-gray areas 35 corresponding to $Al_2O_3$ and light-gray areas 37 corresponding to $B_4C$. But the interlocked regions of $Al_2O_3$ alone are absent. Nor is the $B_4C$ in pores encircling the $Al_2O_3$. The $B_4C$ as shown in Fig. 3 intermingles with the $Al_2O_3$.

Identification of reference numerals used in the drawings

| Legend | Ref. No. | Figure |
|---|---|---|
| Mill $Al_2O_3$ in liquid with a wetting agent surfactant, deflocculant to produce a slurry | 11 | 1 |
| Add hard binder to slurry | 13 | 1 |
| Spray dry slurry | 15 | 1 |
| Screen | 17 | 1 |
| Dry mix with $B_4C$ | 19 | 1 |
| Poured into mold | 21 | 1 |
| Form green body by isostatic pressure | 23 | 1 |
| Pre-sintered green mass optional | 25 | 1 |
| Sintered mass to size | 27 | 1 |
| Ground outer surface | 29 | 1 |
| Cut pellet lengths | 31 | 1 |

## Claims

1. A method of making a burnable neutron-absorber for the burnable-poison rods of a nuclear reactor comprising producing a slurry of a powder of a refractory material including one or more of the class consisting of $Al_2O_3$ and $ZrO_2$; adding a binder to said slurry; drying said slurry to produce a powder of agglomerated particles of aluminum oxide including said binder; mixing said powder with a powder of the class of neutron-absorber materials consisting of one or more elements or compounds of boron,

3

gadolinium, samarium, cadmium, europium, hafnium, dysprosium and indium, to form a mixture of said powders; isostatically compressing said mixture to form a green body; sintering said green body to form a sintered body; and forming said sintered body into a neutron absorber of appropriate shape and dimensions.

2. A method according to claim 1, characterized in that the mean size of the aluminum oxide powder in the slurry is from 10 to 20 µm and the mean size of the powder of the neutron absorber material is from 5 to 15 µm.

3. A method according to claim 1 or 2, characterized in that the slurry is spray dried producing aluminum oxide spheres of 30 to 50 µm mean diameter.

4. A method according to claim 1, 2 or 3 characterized in that the neutron absorber material in the mixture of powders is boron carbide ($B_4C$) and the content of the $B_4C$ in the mixture in weight percent is from 1 to 50.

5. A method according to any one of claims 1 to 4, characterized in that the green body is sintered in an atmosphere of argon at about atmospheric pressure at a temperature of between 1400°C and 1800°C.

6. A method according to any of claims 1 to 5, characterized in that the binder is a hard binder.

7. A burnable neutron absorber bdoy obtained by a method according to any of the preceding claims.

## Patentansprüche

1. Ein Verfahren zur Herstellung eines verbrennbaren Neutronenabsorbers für die verbrennbaren Giftstäbe eines Kornreaktors, bestehend aus Erzeugen einer Aufschlemmung eines Pulvers eines refraktorischen Materials, einschließlich einem oder mehreren der Klasse, die aus $Al_2O_3$ und $ZrO_2$ besteht; Hinzufügen eines Binders zur der Aufschlemmung; Trocknen der Aufschlemmung zur Erzeugung eines Pulvers von agglomerierten Teilchen aus Aluminium-oxyd einschließlich des Binders; Vermischen des Pulvers mit einem Pulver der Klasse von Neutronenabsorber-materialien, die aus einem oder mehreren Elementen oder Verbindungen von Bor, Gadolinium, Samarium, Kadmium, Europium, Hafnium, Dysprosium und Indium bestehten, um eine Mischung der Pulver zu bilden; isostatisches Komprimieren der Mischung, um einem grünen Körper zu formen; Sintern des grünen Körpers zur Formung eines gesinterten Körpers; und Formen des gesinterten Körpers zu einem Neutronenabsorber von geeigneter Form und Abmessungen.

2. Verfahren nach Anspruch 1, dadurch gekennzeichnet, daß die mittlere Größe des Aluminiumoxydpulvers in der Aufschlemmung von 10 bis 20 µm reicht und daß die mittlere Größe des Pulvers in dem Neutronenabsorber-material von 5 bis 15 µm reicht.

3. Ein Verfahren nach Anspruch 1 oder 2, dadurch gekennzeichnet, daß die Aufschlemmung sprühgetrocknet wird, wodurch Aluminiumoxyd-Kügelchen von 30 bis 50 µm mittlerem Durchmesser erzeugt werden.

4. Ein Verfahren nach Anspruch 1, 2 oder 3, dadurch gekennzeichnet, daß das Neutronenabsorber-material in der Mischung der Pulver Borkarbid ($B_4C$) ist und daß der Gehalt von $B_4C$ in der Mischung 1 bis 50 Gew% beträgt.

5. Ein·Verfahren nach einem der Ansprüche 1 bis 4, dadurch gekennzeichnet, daß der grüne Körper in einer Atmosphäre aus Argon bei ungefähr atmosphärischem Druck bei einer Temperatur zwischen 1400°C und 1800°C gesintert wird.

6. Ein Verfahren nach einem der Ansprüche 1 bis 5, dadurch gekennzeichnet, daß der Binder ein harter Binder ist.

7. Ein verbrennbarer Neutronenabsorberkörper, erhalten durch ein Verfahren gemäß einem der vohergehenden Ansprüche.

## Revendications

1. Procédé de fabrication d'un absorbeur combustible de neutrons, pour les barres contaminées combustibles d'un réacteur nucléaire, procédé comportant la préparation d'un coulis à partir d'une poudre d'un matériau réfractaire incluant un ou plusieurs matériaux de la catégorie de $Al_2O_3$ et $ZrO_2$, l'addition d'un liant à ce coulis, le séchage de ce coulis pour obtenir une poudre de particules agglomérées d'oyxde d'aluminium incluant ce liant, le mélange de cette poudre avec une poudre de la catégorie des matériaux absorbers de neutrons, constituée d'un ou plusieurs des éléments bore, gadolinium, samarium, cadmium, europium, hafnium, dysprosium, et induim ou de leurs composés, pour former un mélange de ces poudres, la compression isostatique de ce mélange pour obtenir un corps cru, le frittage de ce corps cru pour obtenir un corps fritté, et le façonnage de ce corps fritté pour obtenir un absorbeur de neutrons d'une configuration et de dimensions appropriées.

2. Procédé selon la revendication 1, caractérisé en ce que la dimension moyenne des grains de la poudre d'oxyde d'aluminium dans le coulis, est de 10 à 10 µm, et que la dimension moyenne des grains de la poudre de matériaux absorbeurs de neutrons est de 5 à 15 µm.

3. Procédé selon la revendication 1 ou 2, caractérisé en ce que le coulis est séché par atomisation en donnant des sphères d'oxyde d'aluminium d'un diamètre moyen de 30 à 50 µm.

4. Procédé selon la revendication 1, 2 ou 3, caractérisé en ce que le matériau absorbeur de neutrons dans le mélange des poudres est du carbure de bore ($B_4C$) et que la teneur du mélange en carbure de bore est de 1 à 50 pour cent en poids.

5. Procédé selon l'une quelconque des revendications 1 à 4, caractérisé en ce que le corps cru est fritté dans une atmosphère d'argon, approximativement à la pression atmosphérique, et à une température comprise entre 1400°C et 1800°C.

6. Procédé selon l'une quelconque des revendications 1 à 5, caractérisé en ce que le liant est un liant dur.

7. Absorbeur combustible de neutrons, obtenu par un procédé selon l'une quelconque des précédentes revendications.

FIG.I.

FIG. 2.

FIG. 3.